# EUROPÄISCHE PATENTSCHRIFT

(11) **EP 0 764 053 B1**
(45) Veröffentlichungstag und Bekanntmachung des Hinweises auf die Patenterteilung: **05.04.2000**
(21) Anmeldenummer: 94925373.6
(22) Anmeldetag: 21.07.1994
(51) Int. Cl.: B03C 1/32

(54) **VERFAHREN UND VORRICHTUNG ZUR TRENNUNG VON NICHTMAGNETISCHEN MATERIALIEN UND GEGENSTÄNDEN UNTER VERWENDUNG MAGNETISCHER FLÜSSIGKEITEN**
PROCESS AND DEVICE FOR SEPARATING NON-MAGNETIC MATERIALS AND OBJECTS BY USING FERROHYDRODYNAMIC FLUID
PROCEDE ET DISPOSITIF DE SEPARATION DE MATIERES OU D'OBJETS NON MAGNETIQUES A L'AIDE DE LIQUIDES FERROHYDRODYNAMIQUES

(30) Priorität: 23.07.1993 DE 4325386; 16.08.1993 DE 4327826; 04.03.1994 DE 4407864; 30.06.1994 DE 4423777
(43) Veröffentlichungstag der Anmeldung: 26.03.1997
(73) Patentinhaber: Enretec Polychemie Entsorgungs- und Recycling-Technik GmbH, 16727 Velten (DE)
(72) Erfinder: BUSKE, Norbert, D-12437 Berlin (DE); GÜNTHER, Dirk, D-12587 Berlin (DE); BÖHME, Hendrik, E., D-13055 Berlin (DE); THIESSEN, Karsten, D-13156 Berlin (DE)
(74) Vertreter: Hengelhaupt, Jürgen, Dipl.-Ing.
(86) Internationale Anmeldenummer: EP9402404
(87) Internationale Veröffentlichungsnummer: WO9503128

(56) Entgegenhaltungen:
- EP-A- 0 328 497
- WO-A-89/11154
- DE-A- 3 324 536
- DE-A- 3 709 852
- FR-A- 1 006 912
- FR-A- 1 184 718
- US-A- 4 834 898
- IEEE TRANSACTIONS ON MAGNETICS., Bd.22, Nr.5, September 1986, NEW YORK US Seiten 1134 - 1136 K. O GRADY ET AL
- SOVIET INVENTIONS ILLUSTRATED Week 8933, 27. September 1989 Derwent Publications Ltd., London, GB; AN 89-240500 & SU,A,1 459 717 (SEC NON-FERR METAL) 16. April 1987
- CHEMICAL ENGINEERING, Bd.81, Nr.2, 21. Januar 1974, NEW YORK US Seiten 74 - 75 N.R.IAMMARTINO
- IEEE TRANSACTIONS ON MAGNETICS., Bd.24, Nr.2, 3. April 1988, NEW YORK US Seiten 1662 - 1664 P DAVIES ET AL

## Beschreibung

Die Erfindung betrifft ein Verfahren und eine Vorrichtung zur Trennung von nichtmagnetischen Materialien gemäß den Oberbegriffen der Ansprüche 1 und 7.

Die Erfindung ist insbesondere einsetzbar zur Stofftrennung von verschiedenen Materialien, beispielsweise beim Recycling von Elektronikschrott oder Autoschrott, bei der Erz- bzw. Kohleaufbereitung oder ähnlichen Trennprozessen. Die umweltfreundlichen wäßrigen Magnetofluide eignen sich besonders zur Schwimm-Sink-Scheidung nichtmagnetischer Stoffe.

Das Prinzip der Schwimm-Sink-Scheidung nichtmagnetischer Materialien in magnetischen Flüssigkeiten in Magnetfeldgradienten ist seit langem bekannt. Allerdings scheiterte bisher die Durchsetzung dieses Verfahrens am Preis der verfügbaren magnetischen Flüssigkeiten, deren unzureichenden Eigenschaften, den Verfahrenskosten und am mangelnden Interesse an Entsorgungs- und Recyclingproblemen.

Die DE 3124276 C2 beschreibt ein Verfahren und eine Vorrichtung zur Trennung nichtmagnetischer fester Materialien unterschiedlicher Dichte, die in einer magnetischen Flüssigkeit suspendiert und in der Flüssigkeit durch eine Trennzone mit einem sich V-förmig verjüngenden Spalt geleitet werden, in dem sich von den benachbarten Bereichen unterscheidende magnetische Auftriebskräfte wirken. Hierbei wird das Magnetfeld von einem Satz Magneten aufgebaut, die sich unter Bildung V-Spaltes mit ihren Polflächen gegenüber stehen. Mittels dieser Lösung können nichtmagnetische Materialien ohne Größenbegrenzung klassiert werden, indem das Material quer zur Längsrichtung des schräg abfallend gekippten V-Spaltes am oberen Ende der Trennzone zugeführt wird und die Materialkomponenten hoher Dichte im Bereich des V-Spaltes abgetrennt werden, während die Materialkomponenten niedrigerer Dichte in der Schwebe gehalten und über den V-Spalt hinweg in den unteren Bereich der schrägliegenden Trennzonen geführt werden.

Die US 4521303 beschreibt ein Verfahren zur Trennung einer Mischung aus Kohle und anderen Festbestandteilen mittels magnetischer Flüssigkeiten durch ein vorgegebenes Zirkulationsregime.

Konkrete Vorrichtungen zur Stofftrennung mittels magnetischer Flüssigkeiten bzw. Verbesserungen an Einzelteilen derartiger Vorrichtungen sind beispielsweise in den Veröffentlichungen DE US 2509959 und DE 3324536 C2 (Gestaltung der Magnetpole); DE 3321102 C2 (Gestaltung der Trennzelle) und US 4113608 (Zu- und Abführung des Trenngutes) beschrieben.

In der FR-A-118471 wird ein Trennverfahren und eine Trennvorrichtung zur Aufbereitung von Erzen, Kohle und ähnlichen Materialien beschrieben. Hierbei wird eine Suspension eingesetzt, die magnetische Teilchen auf der Basis von Eisenverbindungen wie Ferro-Silicium, Ferro-Nickel oder Magnetit enthält.

Das hier beschriebene Verfahren und die Vorrichtung hat den Nachteil, daß eine ökonomische saubere und effektive Dichtetrennung von verschiedenen Materialien unter Einwirkung eines Magnetofeldes nicht möglich ist.

Nachteilig an den bekannten Lösungen ist weiterhin, daß eine Rückgewinnung ausgetragener magnetischer Flüssigkeit und eine Konstanthaltung der Konzentration und des Volumens der magnetischen Flüssigkeit in der Trennzelle nicht möglich bzw. nicht vorgesehen ist.

Durch die Entwicklung neuartiger magnetischer Flüssigkeiten, haben sich die Voraussetzungen für einen großtechnischen Einsatz der Schwimm-Sink-Scheidung mittels magnetischer Flüssigkeiten verbessert.

Magnetische Flüssigkeiten, auch als Magnetofluide bezeichnet, sind Dispersionen kleiner magnetischer Teilchen in frei wählbaren Trägerflüssigkeiten. Die Trägerflüssigkeiten richten sich nach dem Verwendungszweck der Magnetofluide. Um stabile Magnetofluide zu erhalten, müssen die magnetischen Teilchen kolloidal in der Trägerflüssigkeit dispergiert werden. Eine Agglomerisierung dieser Teilchen wird häufig durch eine oder mehrere Adsorptionsschichten von oberflächenaktiven Substanzen verhindert, deren Art wiederum von der Trägerflüssigkeit und den Anforderungen an das Magnetofluid bestimmt wird.

Der Erfindung liegt die Aufgabe zugrunde, ein Verfahren und eine Vorrichtung zur Trennung von nichtmagnetischen Materialien und Gegenständen mit unterschiedlichen von einem Gehäuse umschlossenen Bauteilen und Substanzen unter Verwendung magnetischer Flüssigkeiten im Magnetfeld nach dem Prinzip der Schwimm-Sink-Scheidung zu schaffen, mit welchem eine preiswerte und effektive Trennung von nichtmagnetischen Materialien auch im mittleren und hohen Dichtebereich ermöglicht und eine Umweltbelastung weitgehend vermieden wird.

Diese Aufgabe wird erfindungsgemäß gelöst durch die kennzeichnenden Merkmale der Ansprüche 1 und 7. Zweckmäßige Ausgestaltungen der Erfindung sind in den Unteransprüchen enthalten.
Der besondere Vorteil der Erfindung besteht darin, daß magnetische Flüssigkeiten auf Basis einer wäßrigen Trägerflüssigkeit Verwendung finden und diese magnetischen Flüssigkeiten, welche teilweise mit dem Trenngut aus den Trennzellen ausgetragen werden, rückgewonnen und wieder eingesetzt werden können. Dies wird dadurch ermöglicht, daß die magnetische Flüssigkeit bezüglich Volumen und Konzentration in den Trennkammern über Überwachungseinrichtungen kontinuierlich überwacht und durch Nachdosierung im wesentlichen konstant gehalten wird. Die durch das Trenngut aus der Trennkammer ausgetragene magnetische Flüssigkeit wird in einem ersten Schritt durch Magnetkraft abgetrennt und in weiteren Schritten durch Abspülen abgelöst und die abgetrennte konzentrierte magnetische Flüssigkeit und/oder die abgelöste verdünnte magnetische Flüssigkeit der Trennkammer über Nachdosiereinrichtungen gesteuert wieder zugeführt. Dabei kann die abgetrennte konzentrierte magnetische Flüssigkeit über Nachdosiereinrichtungen direkt zugeführt werden und die abgelöste verdünnte magnetische Flüssigkeit den Trennkammern und/oder dem Vorratsbehälter entweder über Nachdosiereinrichtungen direkt oder unter Zwischenschaltung des Herstellungsprozesses neuer, konzentrierter magnetischer Flüssigkeit indirekt zugeführt werden. Ebenso ist es möglich, über Nachdosiereinrichtungen Wasser zuzuführen, um die natürliche Verdunstung auszugleichen. Durch eine Steuerung der Nachdosiereinrichtungen über Signale der Überwachungseinrichtung wird gewährleistet, daß Menge und Konzentration der in den Trennkammern befindlichen magnetischen Flüssigkeit in einstellbaren Toleranzgrenzen konstant gehalten wird.

Um eine exakte Messung durch die Überwachungseinrichtung zu gewährleisten, wird die magnetische Flüssigkeit in den Trennkammern kontinuierlich oder in zeitlichen Abständen umgewälzt und/oder durchmischt.

Ein weiterer Vorteil der Erfindung besteht in dem kontinuierlichen Betriebsregime, wobei die Zuführung des Trenngutes kontinuierlich durch Vibration erfolgt und die Einleitung in die Trennzelle sowohl auf die Oberfläche der magnetischen Flüssigkeit als auch in das Volumen der magnetischen Flüssigkeit hinein möglich ist. Zum Stofftransport innerhalb der Trennzelle wird die Oberflächenkrümmung der magnetischen Flüssigkeit und die Schwerkraft ausgenutzt.

Der Sensor zur Überwachung des Volumens der magnetischen Flüssigkeit ist vorzugsweise innerhalb der Trennzelle angeordnet. Der Sensor zur Überwachung der Konzentration der magnetischen Flüssigkeit kann innerhalb oder außerhalb der Trennzelle angeordnet und als magnetisches Polarimeter zur Messung der Suszeptibilität ausgebildet sein. Die Sensoren steuern Dosierpumpen und/oder Magnetventile an.

Ein weiterer Vorteil der Erfindung besteht darin, daß die Abtrennung der dem getrennten Material anhaftenden magnetischen Flüssigkeit in einem ersten Schritt über Magnete erfolgt und in weiteren Schritten durch Abspülen mit Wasser vollendet wird. Die magnetische Abtrennung der konzentrierten Flüssigkeit erfolgt dabei mittels einer Trommel mit darin angeordneten Magneten, welche in die Abführungsstrecke integriert ist. Das Abspülen der am Trenngut nach der magnetischen Abtrennung verbliebenen magnetischen Flüssigkeit mittels Wasser erfolgt direkt an der Abführungsstrecke derart, daß das Abspülwasser im Gegenstrom zu dem transportierten Trenngut verläuft und von einer unteren Ebene der Abführstrecke abgeleitet wird.

Für die Elektronikschrottaufbereitung müssen Trennvorgänge oftmals dem eigentlichen Recyclingvorgang vorgeschaltet werden, da je nach Aufbau bzw. Zusammensetzung der Bauelemente unterschiedliche Recyclingverfahren zur Anwendung gelangen bzw. unterschiedliche Zwischen- oder Endlagerungsvorschriften oder Entsorgungsmodalitäten beachtet werden müssen.

Durch die Stabilisierung der Eisenoxidteilchen durch eine erste und eine zweite Adsorptionsschicht, wobei letztere aus alkoxylierten Fettalkoholen mit einer 8-18 C-Atome langen Alkylkette und 4-20 Alkoxyeinheiten gebildet ist, resultiert eine hohe Konzentration der magnetischen Teilchen und damit eine hohe Sättigungsmagnetisierung. Hierdurch werden auch Auftriebseffekte bei schwerem Material wie beispielsweise Kupfer oder Zinn erreicht. Durch eine pH-neutrale Einstellung der magnetischen Flüssigkeiten erfolgt keine Reaktion mit dem zu trennenden Gut, wodurch günstige Transport-, Lagerungs- und Arbeitsschutzbedingungen resultieren. Die magnetischen Flüssigkeiten weisen eine hohe Stabilität, auch bei Elektrolytbelastung, und eine sehr gute Löslichkeit in Wasser auf. Dies ist insbesondere bei pH-Schwankungen, eventuell hervorgerufen durch das Trenngut oder bei direktem Eintrag von Elektrolyten, insbesondere bei Aufarbeitung von Batterien, Akkumulatoren bzw. angelösten Metallen von Bedeutung. Ein gutes Ablaufvermögen führt sowohl zur Wassereinsparung beim Abspülvorgang als auch zur Bildung von hochkonzentrierten Abspüllösungen. Durch ein schlechtes Adsorptionsvermögen der magnetischen Flüssigkeit am Trenngut wird Störungen des Gleichgewichtes zwischen dem als zweite Adsorptionsschicht gebundenen Tensid zu dem gelösten Tensid in der Trägerflüssigkeit entgegengewirkt. Eine geringe Schaumneigung gewährleistet einen ungestörten Betrieb bei schnell bewegter Mechanik sowie eine problemlose und kontinuierliche Füllstands-, Dichte und Viskositätsmessung bzw. -regelung in der Anlage. Die geringe Viskosität hat einen positiven Einfluß auf die Durchsatzmenge. Aus der Stabilität der magnetischen Flüssigkeiten auch bei Verdünnung resuliert eine gute Recyclefähigkeit der verdünnten abgespülten Flüssigkeit.

Die Erfindung soll nachstehend anhand von in den Figuren dargestellten Ausführungsbeispielen näher erläutert werden. Es zeigen:
- Fig.1: Ein Verfahrensschema zur Schwimm-Sink-Scheidung in magnetischen Flüssigkeiten,
- Fig.2: eine schematische Darstellung einer Trennzelle in Seitenansicht,
- Fig.3: eine schematische Darstellung einer Trennzelle in Vorderansicht und
- Fig.4: eine schematische Darstellung der Abführeinrichtung zur Abtrennung der magnetischen Flüssigkeit.

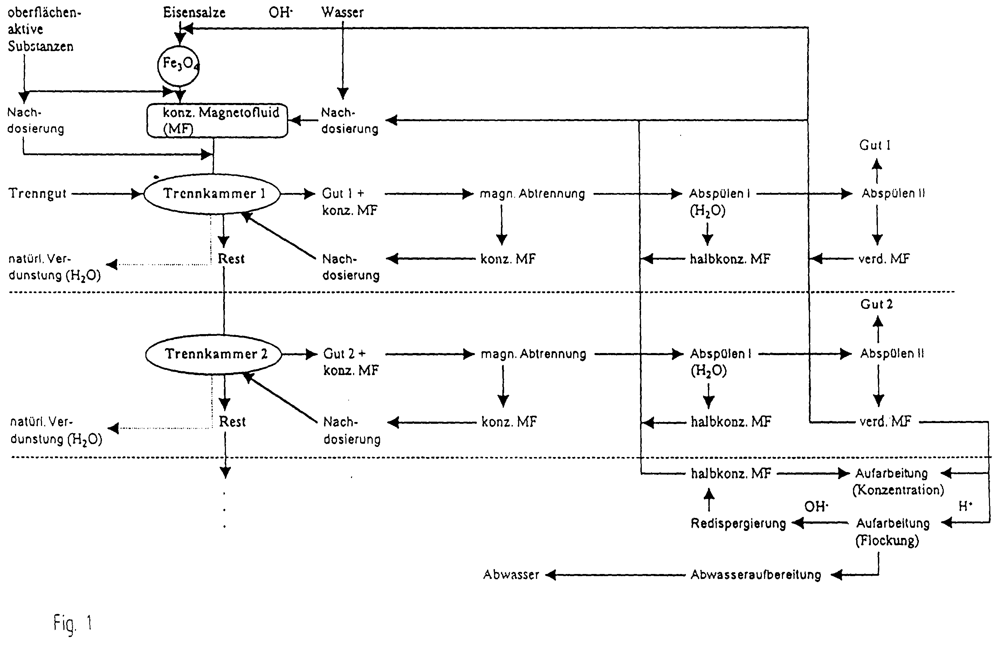

Wie in Figur 1 dargestellt, gelangt das zu trennende Gut in eine Trennkammer 1. Nach Abschluß dieses Trennvorganges resultiert aus der Trennkammer 1 das Gut, an welchem noch ein Anteil konzentrierter magnetischer Flüssigkeit anhaftet sowie ein Rest an Trenngut, welcher einer weiteren Trennkammer 1 zugeführt wird. Die dem Gut anhaftende konzentrierte magnetische Flüssigkeit wird nun magnetisch abgetrennt und die so abgetrennte konzentrierte magnetische Flüssigkeit der Trennkammer 1 und/oder dem Vorratsbehälter 2 über eine Nachdosiereinrichtung gesteuert wieder zugeführt. Der magnetischen Abtrennung folgt ein Abspülprozeß mit Wasser, welcher eine halbkonzentrierte magnetische Flüssigkeit zum Ergebnis hat. In einem oder mehreren weiteren Abspülprozessen wird eine verdünnte magnetische Flüssigkeit erhalten. Die halbkonzentrierte magnetische Flüssigkeit kann entweder der Trennkammer 1 direkt über Nachdosiereinrichtungen zugeführt werden oder, wie in dem Verfahrensschema gemäß Figur 1 dargestellt, in einem Vorratsbehälter 2 zwischengespeichert werden. Die verdünnte magnetische Flüssigkeit kann entweder ebenfalls direkt zur Nachdosierung verwendet werden oder sie wird dem Herstellungsprozeß neuer, konzentrierter magnetischer Flüssigkeit anstelle von Wasser zugeführt. Zusätzlich zu der Nachdosierung mit konzentrierter magnetischer Flüssigkeit oder halbkonzentrierter magnetischer Flüssigkeit ist auch eine Nachdosierung mit verdünnter magnetischer Flüssigkeit, mit Wasser bzw. mit oberflächenaktiven Substanzen möglich. Das am Ende des Abspülprozesses anfallende Wasser wird einer Aufbereitung, beispielsweise einer Flockung, und einer Redispergierung unterzogen und das Restwasser über eine Abwasseraufbereitung dem Abwasser zugeführt. Die Nachdosiereinrichtungen werden durch Signale der Sensoren 4a und 4b gesteuert, wobei die Zuführung der nachzudosierenden Substanzen über Dosierpumpen 5b und/oder Magnetventile 5a erfolgt.

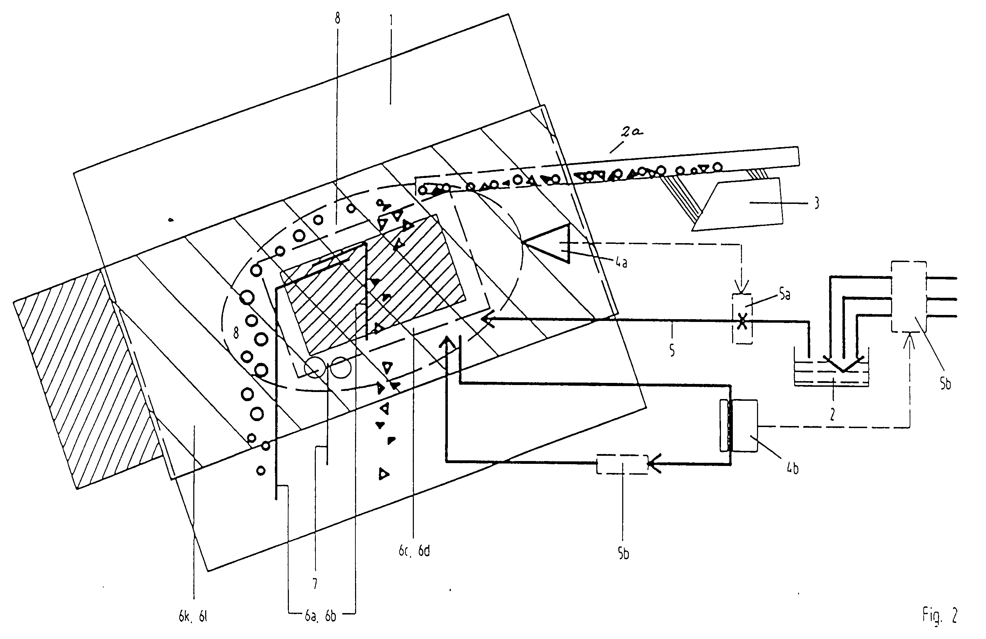

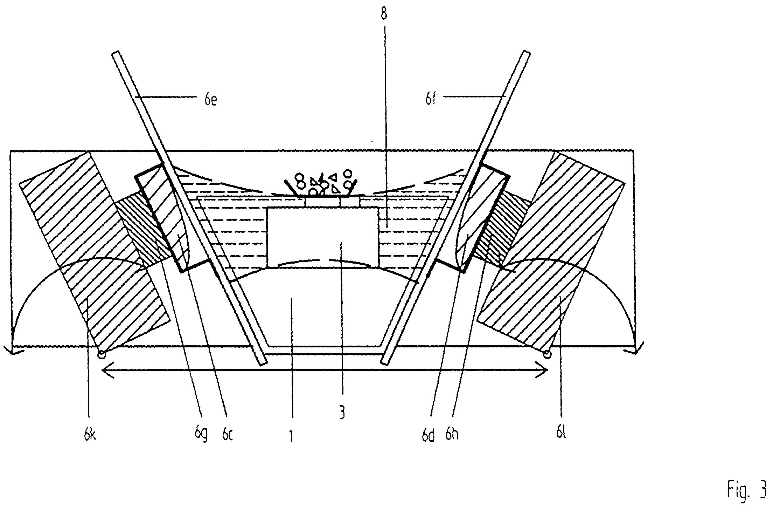

Die Figuren 2 und 3 zeigen in schematischer Darstellung die eigentliche Trennzelle. Das zu trennende Gut wird der Trennzelle 1 über eine Zuführungseinrichtung 2a zugeführt. Im Ausführungsbeispiel erfolgt die Zuführung auf die Oberfläche der magnetischen Flüssigkeit 8. Es ist jedoch ebenso möglich, die Zuführung in das Innere der magnetischen Flüssigkeit 8 vorzunehmen. Die Trennzelle 1 enthält Sensoren 4a und 4b zur Überwachung des Volumens und der Konzentration der magnetischen Flüssigkeit 8. Im vorliegenden Ausführungsbeispiel sind diese Sensoren 4a innerhalb und 4b außerhalb der Trennzelle 1 angeordnet und die magnetische Flüssigkeit 8 wird über eine Pumpe 5b in einem Kreislauf dem Sensor 4b zugeführt. Weiterhin enthält die Trennzelle 1 mindestens eine Flüssigkeitszuführung 5 zur Nachdosierung der magnetischen Flüssigkeit. Die Flüssigkeitszuführung erfolgt selbständig durch magnetische Anziehungskräfte bei geöffnetem Magnetventil 5a.

Die Materialzuführeinrichtung 2a ist mit einem Vibrationsförderer 3 beaufschlagt. Durch den Vibrationsförderer 3 wird eine kontinuierliche Zuführung des zu trennenden Materials gewährleistet. Die Trennzelle 1 weist verstellbare Prallbleche 6a, 6b auf, welche zur Optimierung der Trennung eingestellt werden können. Auch die Magnete 6g, 6h bzw. Polschuhe 6c, 6d der Magnete 6g, 6h bzw. die an den Polschuhen 6c, 6d angeordneten Bleche 6e, 6f und die Weicheisen 6k, 6l sind in ihrem Winkel verstellbar. Weiterhin weist die Trennzelle 1 eine Durchmischungsvorrichtung 7 auf, welche im vorliegenden Ausführungsbeispiel als mechanisches Rührwerk ausgebildet ist. Es ist jedoch ebenso möglich, die Durchmischungsvorrichtung 7 beispielsweise als Ultraschalldispergator auszubilden. Der Sensor 4b zur Überwachung der Konzentration der magnetischen Flüssigkeit weist mindestens ein magnetisches Polarimeter auf, welches die Suszeptibilität mißt.
Das Volumen wird konstant gehalten durch Ausgleich der Volumenverluste, welcher über einen Sensor 4a geregelt wird.

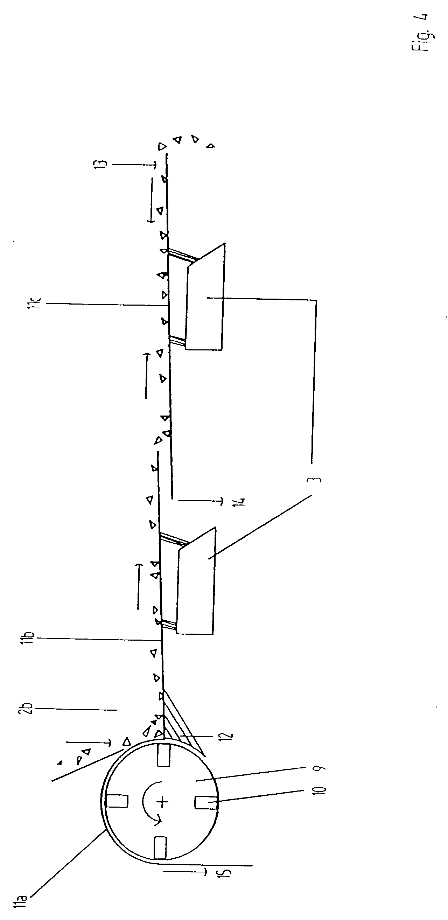

Die Abtrennung der magnetischen Flüssigkeit von dem getrennten Gut ist in Figur 4 dargestellt. Die Abführeinrichtung 2b weist im vorliegenden Ausführungsbeispiel eine Trommel 9 mit darin angeordneten Permanentmagneten 10 auf. Die Trommel 9 rotiert unter dem Teil der Abführungsstrecke 11a entgegengesetzt zu dem Strom des zugeführten getrennten Gutes. Dabei wird von den in der Trommel 9 angeordneten Magneten 10 die dem getrennten Gut anhaftende konzentrierte magnetische Flüssigkeit mitgenommen und an dem Abfluß 15 wieder freigegeben. Im Übergangsbereich der Abführungsstrecke 11a und 11b ist ein Weicheisenteil 12 angeordnet. Das von einem Teil der anhaftenden konzentrierten magnetischen Flüssigkeit befreite getrennte Material wird nun mittels im Vibrationsförderer 3 erzeugter Vibration entlang der Abführungsstrecke 11b gefördert und gelangt auf die Abführungsstrecke 11c. Hier wird es im Gegenstrom mit Wasser, welches über einen Wasserzufluß 13 zugeführt wird, gewaschen. Die verdünnte magnetische Flüssigkeit wird über einen Abfluß 14 abgeführt. Die Abführstrecke 11b, 11c ist ansteigend geneigt und verläuft in mehreren Ebenen, so daß das Wasser dem natürlichen Gefälle folgend abläuft.

Die Magnete sind im vorliegenden Ausführungsbeispiel generell als Permanentmagnete ausgebildet. Darüber hinaus ist es jedoch ebenso möglich, Elektromagnete zu verwenden. Eine weitere Modifizierung der Abtrennung der magnetischen Flüssigkeit ist dadurch möglich, daß anstelle einer Trommel mit Permanentmagneten getaktet geschaltete Elektromagnete unter der Abführungsstrecke angeordnet werden.

## Patentansprüche

1. Verfahren zur Trennung nichtmagnetischer Materialien unter Verwendung magnetischer Flüssigkeiten im Magnetfeld nach dem Prinzip der Schwimm-Sink-Scheidung in einer Trennkammer oder in mehreren Trennkammern, wobei die zu trennenden Materialien unterschiedliche Dichte aufweisen und auf welche gemäß diesem Dichteunterschied unterschiedliche Kräfte einwirken,
dadurch gekennzeichnet, daß
- die magnetischen Flüssigkeiten bezüglich Volumen und Konzentration in den Trennkammern über eine Überwachungseinrichtung kontinuierlich überwacht und durch Nachdosierung im wesentlichen konstant gehalten,
- die durch das Trenngut aus den Trennkammern ausgetragene magnetische Flüssigkeit in einem ersten Schritt durch Magnetkraft abgetrennt,
- in weiteren Schritten durch Abspülen abgelöst und
- die abgetrennte konzentrierte magnetische Flüssigkeit und/oder die abgelöste verdünnte magnetische Flüssigkeit den Trennkammern über Nachdosiereinrichtungen gesteuert wieder zugeführt wird.

2. Verfahren nach Anspruch 1,
dadurch gekennzeichnet, daß
die abgetrennte konzentrierte magnetische Flüssigkeit den Trennkammern über Nachdosiereinrichtungen direkt oder über Vorratsbehälter zugeführt wird und/oder die abgelöste verdünnte magnetische Flüssigkeit den Trennkammern über Nachdosiereinrichtungen direkt oder über Vorratsbehälter und/oder unter Zwischenschaltung des Herstellungsprozesses neuer, konzentrierter magnetischer Flüssigkeit indirekt zugeführt wird.

3. Verfahren nach Anspruch 1,
dadurch gekennzeichnet, daß
den Trennkammern über Nachdosiereinrichtungen Wasser zugeführt wird.

4. Verfahren nach einem der voranstehenden Ansprüche 1 bis 3,
dadurch gekennzeichnet, daß
die Nachdosiereinrichtungen gesteuert werden durch Signale der Überwachungseinrichtung.

5. Verfahren nach Anspruch 1,
dadurch gekennzeichnet, daß
die magnetische Flüssigkeit in den Trennkammern umgewälzt und/oder durchmischt wird und die Zuführung des Trenngutes zu den Trennkammern kontinuierlich durch Vibration erfolgt.

6. Verfahren nach Anspruch 5,
dadurch gekennzeichnet, daß
die Zuführung des zu trennenden Materials auf die Oberfläche der magnetischen Flüssigkeit und/oder in das Volumen der magnetischen Flüssigkeit hinein erfolgt.

7. Vorrichtung zur Trennung nichtmagnetischer Materialien unter Verwendung magnetischer Flüssigkeiten, bestehend aus einer oder mehreren Trennzellen sowie Zuführungseinrichtungen für das zu trennende Material und Abführungseinrichtungen für das getrennte Material,
dadurch gekennzeichnet, daß
die Trennzelle (1) Sensoren (4a, 4b) zur Überwachung des Volumens und der Konzentration der magnetischen Flüssigkeit (8) sowie mindestens eine absperrbare Flüssigkeitszuführung (5) zur Nachdosierung magnetischer Flüssigkeit aufweist und daß
die Abführeinrichtung (2b) eine Trommel (9) mit darin angeordneten Magneten (10) zur Abtrennung der dem getrennten Material anhaftenden magnetischen Flüssigkeit aufweist, welche unter der Abführungsstrecke (11a, 11b, 11c) angeordnet ist.

8. Vorrichtung nach Anspruch 7,
dadurch gekennzeichnet, daß
die Materialzuführeinrichtung (2a) mit mindestens einem Vibrationsförderer (3) beaufschlagt ist.

9. Vorrichtung nach Anspruch 7,
dadurch gekennzeichnet, daß
die Trennzelle (1) verstellbare Prallbleche (6a, 6b) und verstellbare Polschuhe (6c, 6d) und eine Durchmischungsvorrichtung (7) aufweist.

10. Vorrichtung nach Anspruch 7,
dadurch gekennzeichnet, daß
der Sensor (4a) zur Überwachung des Volumens innerhalb und der Sensor (4b) zur Überwachung der Konzentration der magnetischen Flüssigkeit (8) außerhalb der Trennzelle (1) angeordnet ist und die Sensoren (4a, 4b) Dosierpumpen und/oder Magnetventile ansteuern.

11. Vorrichtung nach Anspruch 7 oder 10,
dadurch gekennzeichnet, daß
der Sensor (4b) ein magnetisches Polarimeter zur Messung der Suszeptibilität ist.

12. Vorrichtung nach Anspruch 7,
dadurch gekennzeichnet, daß
die Abführeinrichtung (2b) mit mindestens einem Vibrationsförderer (3) beaufschlagt und die Abführstrecke (11b, 11c) ansteigend geneigt und in mehreren Ebenen verlaufend ausgebildet ist.

13. Vorrichtung nach Anspruch 7,
dadurch gekennzeichnet, daß
die Trommel (9) entgegengesetzt der Transportrichtung des getrennten Gutes angetrieben wird und innerhalb der Trommel (9) Magnete (10) angeordnet sind und sich im Übergangsbereich der Abführstrecken (11a, 11b) ein Weicheisenteil (12) befindet.

14. Vorrichtung nach Anspruch 7,
dadurch gekennzeichnet, daß
die Abtrennung der dem getrennten Material anhaftenden magnetischen Flüssigkeit mittels getaktet geschalteter Elektromagnete erfolgt.

15. Vorrichtung nach Anspruch 7 oder 8,
dadurch gekennzeichnet, daß
am Ende der Abführungsstrecke (11c) ein Wasserzufluß (13) und am Anfang der Abführungsstrecke (11c) ein Abfluß (14) und am Ende der Abführungsstrecke (11a) ein Abfluß (15) angeordnet ist.

16. Vorrichtung nach Anspruch 14 oder 15,
dadurch gekennzeichnet, daß
die Abflüsse (14) und (15) mit der Flüssigkeitszuführung (5) verbunden sind.

17. Vorrichtung nach einem der Ansprüche 7 bis 16,
dadurch gekennzeichnet, daß
die Magnete Permanentmagnete und/oder Elektromagnete sind.

18. Vorrichtung nach Anspruch 7 oder 10,
dadurch gekennzeichnet, daß
der Sensor (4a) ein einstellbares Füllstandsüberwachungselement ist.

19. Vorrichtung nach Anspruch 7,
dadurch gekennzeichnet, daß
die Flüssigkeitszuführung (5) mit einem Vorratsbehälter (2) verbunden ist.

## Claims

1. Process of separating non-magnetic materials with the use of magnetic fluids in the magnetic field according to the sink-float separation principle in a separating chamber or in several separating chambers, whereby the materials to be separated are of varying density and, according to this difference in density, are subject to varying forces,
characterised in that,
- the magnetic fluids are continuously monitored as regards volume and concentration in the separating chambers through a monitoring installation and are kept basically constant through post-dosage,
- in a first stage the magnetic fluid, which is carried out from the separating chambers on the separated product, is separated through magnetic force,
- in subsequent stages is removed through rinsing, and
- the separated concentrated magnetic fluid and/or the removed diluted magnetic fluid is conveyed back into the separating chambers via post-dosage appliances.

2. Process aaccording to claim 1,
characterised in that,
the separated concentrated magnetic fluid is conveyed to the separating chambers directly via post-dosage appliances or via storage receptacles, and /or the removed diluted magnetic fluid is conveyed to the separating chambers directly via post-dosage equipment or via storage receptacles, and/or indirectly through intermediate operation of the manufacturing process of new, concentrated magnetic fluid.

3. Process according to claim 1,
characterised in that,
water is introduced to the separating chambers via post-dosage appliances.

4. Process according to one of the preceding claims 1 to 3,
characterised in that,
the post-dosage appliances are controlled through signals from the monitoring installation.

5. Process aaccording to claim 1,
characterised in that,
the magnetic fluid in the separating chambers is circulated and/or mixed and the conveyance of the product to be separated into the separating chambers occurs continuously through vibration.

6. Process according to claim 5,
characterised in that,
the conveyance of the material to be separated takes place onto the surface of the magnetic fluid and/or into the volume of the magnetic fluid.

7. Device for separating non-magnetic materials with the use of magnetic fluids, consisting of one or several separating cells and also conveyance appliances for the material to be separated and outlet conveyance appliances for the separated material,
characterised in that,
the separating cell (1) has sensors (4a, 4b) for monitoring the volume and the concentration of the magnetic fluid (8), as well as at least one blockable fluid conveyance unit (5) for the post-dosage of magnetic fluid and the outlet conveyance appliance (2b) has a drum (9) with magnets (10) placed within it for the separation of the magnetic fluid adhering to the separated material, and which is situated under the outlet route (11a, 11b, 11c).

8. Device according to claim 7,
characterised in that,
the material conveyance appliance (2a) admits at least one vibroconveyor (3).

9. Device according to claim 7,
characterised in that,
the separating cell (1) has adjustable recoiling metal sheets (6a, 6b) and adjustable pole shoes (6a, 6d) and a mixing appliance (7).

10. Device according to claim 7,
characterised in that,
the sensor (4a) monitoring the volume is situated inside and the sensor (4b) monitoring the concentration of the magnetic fluid (8) outside the separating cell (1) and the sensors (4a, 4b) trigger the dosage pumps and/or magnet valves.

11. Device according to claim 7 or 10,
characterised in that,
the sensor (4b) is a magnetic polarimeter for the measurement of susceptibility.

12. Device according to claim 7,
characterised in that,
the outlet conveyance appliance (2b) is endowed with at least one vibroconveyor (3) and the outlet conveyance route (11b, 11c) slopes upwards and is constructed running on several levels.

13. Device according to claim 7,
characterised in that,
the drum (9) is driven in the opposite direction to that of the transport of the separated product and magnets (10) are placed within the drum (9), and in the transitional area of the outlet conveyance routes (11a, 11b) a soft iron component (12) is situated.

14. Device according to claim 7,
characterised in that,
the separation of the magnetic fluid, to which the separated material adheres, takes place by means of time-pulse-controlled electromagnets.

15. Device according to claim 7 or 8,
characterised in that,
at the end of the outlet conveyance route (11c) there is a water inlet (13) and at the start of the outlet conveyance route (11c) a drain outlet (14) and at the end of the outlet conveyance route (11a) a drain outlet (15).

16. Device according to claim 14 or 15,
characterised in that,
the drain outlets (14) and (15) are connected to the fluid conveyance appliance (5).

17. Device according to one of the claims 7 to 16,
characterised in that,
the magnets are permanent magnets and/or electromagnets.

18. Device according to claim 7 or 10,
characterised in that,
the sensor (4a) is an adjustable level-monitoring element.

19. Device according to claim 7,
characterised in that,
the fluid conveyance appliance(5) is connected to a storage receptacle (2).

## Revendications

1. Procédé de séparation de matériaux non magnétiques en utilisant des liquides magnétiques dans le champ magnétique, selon le principe de la séparation par flottage et immersion dans une chambre de séparation ou dans plusieurs chambres de séparation, dans lequel les matériaux à séparer présentent des densités différentes et sur lesquelles des forces différentes agissent selon cette différence de densité,
caractérisé en ce que
- les liquides magnétiques sont surveillés en continu pour ce qui concerne leur volume et leur concentration dans les chambres de séparation par un dispositif de surveillance et sont maintenus essentiellement constants par un post-dosage,
- le liquide magnétique extrait des chambres de séparation par le produit à séparer est séparé par la force magnétique au cours d'une première étape,
- ce liquide est séparé par rinçage au cours d'étapes ultérieures, et
- le liquide magnétique concentré et séparé et/ou le liquide magnétique dilué et séparé est ramené à nouveau selon asservissement aux chambres de séparation par des dispositifs de post-dosage.

2. Procédé selon la revendication 1, caractérisé en ce que le liquide magnétique concentré séparé est amené en passant par les dispositifs de post-dosage directement ou par un réservoir de stockage aux chambres de séparation et/ou le liquide magnétique dilué séparé est ramené aux chambres de séparation par l'intermédiaire de dispositifs de post-dosage, directement ou indirectement par l'intermédiaire d'un réservoir de stockage, et/ou avec interposition d'une opération de préparation de nouveau liquide magnétique concentré.

3. Procédé selon la revendication 1, caractérisé en ce que de l'eau est amenée aux chambres de séparation par des dispositifs de post-dosage.

4. Procédé selon l'une des revendications précédentes 1 à 3, caractérisé en ce que les dispositifs de post-dosage sont asservis par des signaux du dispositif de surveillance.

5. Procédé selon la revendication 1, caractérisé en ce que le liquide magnétique est mis en circulation dans les chambres de séparation et/ou est mélangé et que l'adduction du produit à séparer est réalisée en continu vers les chambres de séparation sous l'effet des vibrations.

6. Procédé selon la revendication 5, caractérisé en ce que l'adduction du matériau à séparer a lieu à la surface du liquide magnétique et/ou dans le volume du liquide magnétique.

7. Dispositif pour la séparation de matériaux non magnétiques en utilisant du liquide magnétique constitué d'une ou de plusieurs cellules de séparation, ainsi que de dispositifs d'adduction pour le matériau à séparer et des dispositifs d'évacuation pour le matériau séparé
caractérisé en ce que
la cellule de séparation (1) présente des capteurs (4a, 4b) pour surveiller le volume et la concentration du liquide magnétique (8) ainsi qu'au moins une adduction de liquide (5) obstruable pour le post-dosage du liquide magnétique et en ce que le dispositif d'évacuation (2b) présente un tambour (9) avec des aimants (10) disposés dans celui-ci pour séparer le liquide magnétique adhérant aux matériaux séparés, ledit tambour étant disposé sous la zone d'évacuation (11a, 11b, 11c).

8. Dispositif selon la revendication 7, caractérisé en ce que le dispositif d'adduction de matériau (2a) est sous l'effet d'au moins un transporteur à vibrations (3).

9. Dispositif selon la revendication 7, caractérisé en ce que la cellule de séparation (1) présente des plaques à chicanes réglables (6a, 6b) et des pièces polaires réglables (6c, 6d) et un dispositif de mélange (7).

10. Dispositif selon la revendication 7, caractérisé en ce que le capteur (4a) pour surveiller le volume est disposé dans la cellule de séparation (1) et le capteur (4b) pour surveiller la concentration du liquide magnétique (8) est disposé en dehors de la cellule de séparation (1) et que les capteurs (4a, 4b) asservissent des pompes doseuses et/ou des vannes magnétiques.

11. Dispositif selon la revendication 7 ou 10, caractérisé en ce que le capteur (4b) est un polarimètre magnétique pour la mesure de la susceptibilité.

12. Dispositif selon la revendication 7, caractérisé en ce que le dispositif d'évacuation (2b) est sous l'effet d'au moins un transporteur à vibrations (3) et que les zones d'évacuation (11b, 11c) présentent une pente ascendante et sont disposées en plusieurs plans successifs.

13. Dispositif selon la revendication 7, caractérisé en ce que le tambour (9) est entraîné dans le sens opposé à la direction de transport du produit séparé et que des aimants (10) sont disposés dans le tambour (9) et qu'une pièce en fer doux (12) se trouve dans la région de transition des zones d'évacuation (11a, 11b).

14. Dispositif selon la revendication 7, caractérisé en ce que la séparation du liquide magnétique adhérant aux matériaux séparés s'effectue au moyen d'électro-aimants actionnés en cadence.

15. Dispositif selon la revendication 7 ou 8, caractérisé en ce que, à l'extrémité de la zone d'évacuation (11c) se trouve une adduction d'eau (13) et au début de la zone d'évacuation (11c) se trouve une évacuation (14) et qu'à la fin de la zone d'évacuation (11a) se trouve une évacuation (15).

16. Dispositif selon la revendication 14 ou 15, caractérisé en ce que les évacuations (14) et (15) sont connectées à l'adduction de liquide (5).

17. Dispositif selon l'une des revendications 7 à 16, caractérisé en ce que les aimants sont des aimants permanents et/ou des électro-aimants.

18. Dispositif selon la revendication 7 ou 10, caractérisé en ce que le capteur (4a) est un élément réglable surveillant l'état de remplissage.

19. Dispositif selon la revendication 7, caractérisé en ce que l'adduction de liquide (5) est connectée à un réservoir de stockage (2).
